# EUROPEAN PATENT APPLICATION

(11) **EP 2 704 147 A2**
(43) Date of publication of application: **05.03.2014**
(21) Application number: 13174703.2
(22) Date of filing: 02.07.2013
(51) Int. Cl.: G11B 27/034, G11B 27/32, G11B 27/34

(54) **Recording playback apparatus**

(30) Priority: 27.08.2012 JP 2012186298
(71) Applicant: Funai Electric Co., Ltd., Daito city Osaka 574-0013 (JP)
(72) Inventor: Nakaya, Hiroyuki, Osaka, Osaka 574-0013 (JP)
(74) Representative: Osha Liang SARL

(57) **Abstract**

A recording playback apparatus (10) for a plurality of users that records and plays back files includes a control unit (21) that controls a display unit (20) to display a list encoded with an identification for each of the files of whether the file may be deleted, wherein the identification is selectable by each of the plurality of users, and an identification for each of the files of whether the file has been played back by each of the plurality of users.

## Description

### [Field of the Disclosure]

The present disclosure relates to recording playback apparatuses used by a plurality of users.

### [Background Art]

In recent years, recording playback apparatuses called recorders, composed an optical disk (DVD or BD and the like) devices, hard-disk devices, or hybrid devices of these, have become popular. Such recording playback apparatuses are used alone by a single user, but generally, they are often commonly used among a plurality of users, such as family members.

In such a case, a recording region (a hard disk or the like) in a recording playback apparatus is shared, so each user is able freely to listen or to delete a recorded program. A variety of technologies have been proposed for a recording playback apparatus shared by a plurality of users.

For example, Japanese unexamined patent application publication 2005-92975 discloses a recording playback apparatus that does not delete or overwrite content until the content of the reserved video is viewed by all who reserved the content, when content is shared with others with reservations.

Japanese unexamined patent application publication 2001-94928 discloses a digital-television broadcast-recording device that is equipped with an input unit for inputting viewer information unique to each of a plurality of viewers; a viewer-information memory unit for storing viewer information of a predetermined viewer; and a viewer-information identifying unit that identifies a viewer by comparing viewer information inputted to the input unit, and viewer information stored in the viewer-information memory unit, to restrict recording, playback or deletion of a program according to identification results of the viewer-information identification unit.

Japanese unexamined patent application publication 2007-266899 discloses a video-recording playback apparatus that records video data to an HDD or the like, by adding thereto a user identifier, when recording video, and that permits access to that recorded video data only when there is an identifier added to the targeted video data that matches the identifier of the user that specified that recording, in the playback and deletion operations.

Japanese unexamined patent application publication 2008-11407 discloses a video-recording apparatus equipped with a video-storage unit that stores video files; a memory unit that stores a table indicating settings to prohibit deletion and to permit deletion of each video file stored in the video-storage unit; and a rewriting unit that rewrites the table when a total volume of the video files prohibited for deletion stored in the video storage unit has reached a predetermined value.

However, the technologies disclosed in above-mentioned patent documents are not constituted easily to judge a viewing status for each user, permission to delete, or no permission to delete each video program, and are not necessarily useful. Furthermore, there are recording playback apparatuses that enable a user to load and playback images and video the user has captured without accounting for how these files are handled.

### [Summary of the Disclosure]

One or more embodiments of the present disclosure provide a useful recording playback apparatus that easily judges a viewing status for each user, permission to delete, or no permission to delete.

In one aspect, the present disclosure provides a recording playback apparatus for a plurality of users that records and plays back files, the recording playback apparatus comprising: a control unit that controls a display unit to display a list encoded with: an identification for each of the files of whether the file may be deleted, wherein the identification is selectable by each of the plurality of users, and an identification for each of the files of whether the file has been played back by each of the plurality of users.

According to one or more embodiments, the present disclosure provides a recording playback apparatus for a plurality of users, the recording playback apparatus comprising: a tuner that receives and demodulates a broadcast signal; a data processing unit that splits video and audio data and control data obtained from the tuner; a recording playback unit that records compressed video and audio data received from the data processing unit; and a control unit that controls a display unit to display a list encoded with: an identification for each of the video and audio data of whether the data may be deleted, wherein the identification is selectable by each of the plurality of users, and an identification for each of the video and audio data of whether the data has been played back by each of the plurality of users.

In another aspect, the present disclosure provides a method of operating a recording playback apparatus for a plurality of users that records and plays back files, the method comprising: identifying, for each of the files, whether the file may be deleted, wherein the identification is selectable by each of the plurality of users; and identifying, for each of the files, whether the file has been played back by each of the plurality of users.

According to one or more embodiments, the identification of whether the file has been played back can be selected for each of the files for each of the users.

According to one or more embodiments, before recording or after recording the files, the control unit prompts selection of an identifier that identifies the users that identified the file recording and sets a user field of the identifier selected to indicate that the file has not been played.

According to one or more embodiments, it may be useful for a user using the recording playback apparatus to be able easily to judge the viewing status for each user, OK to Delete, or Not OK to Delete for each file.

Further embodiments of the recording playback apparatus and of the method of operating a recording playback apparatus are defined in the dependent claims.

### [Brief Description of the Drawings]

Fig. 1 is a block diagram of a constitution of a television system according to one or more embodiments of the present disclosure;
Fig. 2 is a flowchart showing operations related to file management on an HDD-integrated optical-disc apparatus according to one or more embodiments of the present disclosure; and
Fig. 3 is a drawing depicting an example of a video list in the HDD-integrated optical-disc apparatus according to one or more embodiments of the present disclosure.

### [Detailed Description of the Disclosure]

Embodiments of the present disclosure will now be described using a hard-disk drive (HDD) integrated optical-disc apparatus as an example of the recording playback apparatus.

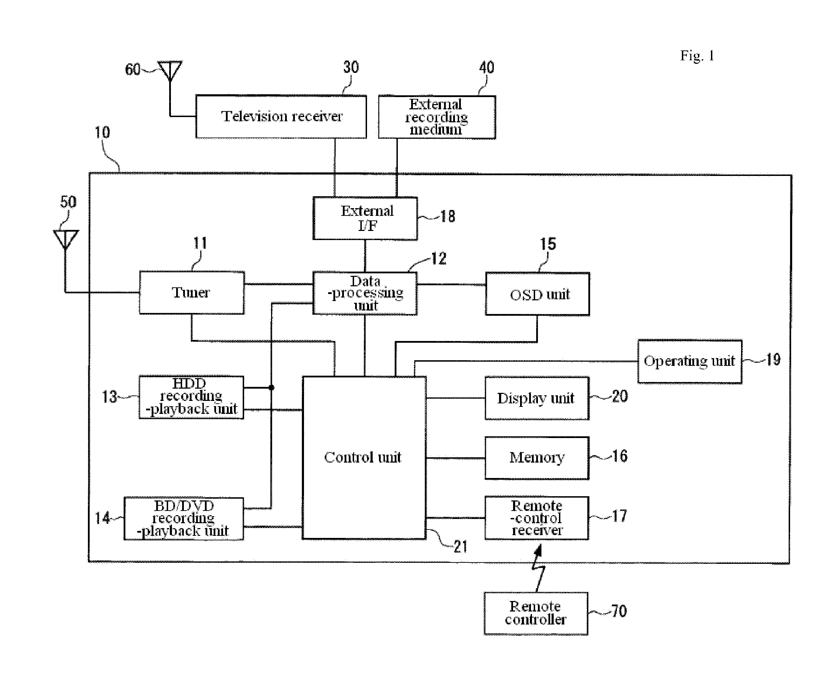

Fig. 1 is a block diagram of a constitution of a television system. This television system comprises an HDD-integrated optical-disc apparatus according to one or more embodiments of the present disclosure, and optionally its peripheral device. A television receiver 30 capable of receiving digital broadcasts, an external recording medium 40 such as an external HDD or memory card or the like, and an antenna 50 may be connected to the HDD-integrated optical-disc apparatus 10. Also, an antenna 60 may be connected also to the television receiver 30. Also, the HDD-integrated optical-disc apparatus 10 can be operated by a remote controller 70.

If an interface uni-directionally or bi-directionally transmits a video signal and audio signal, and a control signal bi-directionally, the interface can be used to connect the HDD-integrated optical-disc apparatus 10 and the television receiver 30, and the HDD-integrated optical-disc apparatus 10 and the external recording medium 40. For example, an HDMI terminal can be used to connect the HDD-integrated optical-disc apparatus 10 and the television receiver 30. A USB terminal or card slot can be used to connect the HDD-integrated optical-disc apparatus 10 and the external recording medium 40.

Next, a configuration of the HDD-integrated optical-disc apparatus 10 will be described. The HDD-integrated optical-disc apparatus 10 may comprise a tuner 11. The HDD-integrated optical-disc apparatus 10 may further comprise a data-processing unit 12, a HDD recording playback unit 13, a BD (Blu-ray Disc)/DVD recording playback unit 14, and an OSD (On-screen Display) unit 15. The HDD-integrated optical-disc apparatus 10 may further comprise a memory 16, a remote-control receiver 17, an external I/F 18, an operating unit 19, a display unit 20, and a control unit 21.

The tuner 11 is configured to demodulate and digitize television broadcast signals received by the antenna 50. The data-processing unit 12 is configured to split video and audio data and control data obtained from the tuner 11, and optionally also from the television receiver 30, and the external recording medium 40. Conversely, this also may join output video and audio data, and control data. Also, the data-processing unit 12 may be configured to demodulate video data, and compression-encode video and audio data. Furthermore, the data-processing unit 12 may elongate and decode video and audio data obtained from the HDD recording playback unit 13, the BD/DVD recording playback unit 14, and external recording medium 40. Also, the data-processing unit 12 may temporarily store I/O data.

The HDD recording playback unit 13 may record to HDD compressed video and audio data received from the data-processing unit 12, and load recorded data to the HDD. The BD/DVD recording playback unit 14 may record to an inserted BD or DVD compressed video and audio data received from the data-processing unit 12, and load recorded data to the BD or the DVD.

The OSD unit 15 may make settings for various setting values including, for example, a video reservation and a video list while displaying a portion of the display unit (not shown in the drawing) of the television receiver 30. The memory 16 is composed of ROM and RAM; various programs and operational data are stored. The remote-control receiver 17 may receive a signal from the remote controller 70.

Also, the television receiver 30 and the external recording medium 40 can be connected to the external I/F 18. The operation unit 19 may include various operation keys a portion thereof being the same as operation keys for the remote controller 70. The display unit 20 may comprise a VFD (Vacuum Fluorescent Display), and may simply display an operating status.

The control unit 21 may control each unit of the HDD-integrated optical-disc apparatus 10. For example, the control unit 21 may record various files to recording media (the HDD, BD, DVD or external recording medium 40) and control playback of files. Recording a file may include copying or moving operations between recording media. Files may be video recordings of programs in television broadcasts; these files may be handled as video, graphics and audio files, such as user captured movies, photos and music and other.

Also, the control unit 21 may implement control to output to the display unit and the like of the television receiver 30 a list encoded with an identification of whether the file may be deleted (e.g., "OK to Delete/Not OK to Delete") for a plurality of users of each file. Also, the control unit 21 may implement control to enable selection of OK to Delete/Not OK to Delete for each file, for each user, in this list.

Also, the list may be coded with an identification of whether the file has been played (e.g., "played/not played") for a plurality of users for each file. In such a case, the control unit 21 may also implement control to enable selection of played back/not played back for each file, for each user, in this list.

Furthermore, the control unit 21 may prompt selection of an identifier that identifies the user that specified the file recording, before recording or after recording the file to the recording medium, and implement control to set the user field of the identifier selected for that file in the list to Not-played.

The control unit 21 may also implement a control automatically to delete a file that all registered users OK to Delete, or that all users have played back. A file may be automatically deleted after a predetermined amount of time has passed (for example, after one week), after all registered users identified that the file may be deleted, or all the users have played back the file. These exemplary controls will now be described in detail below.

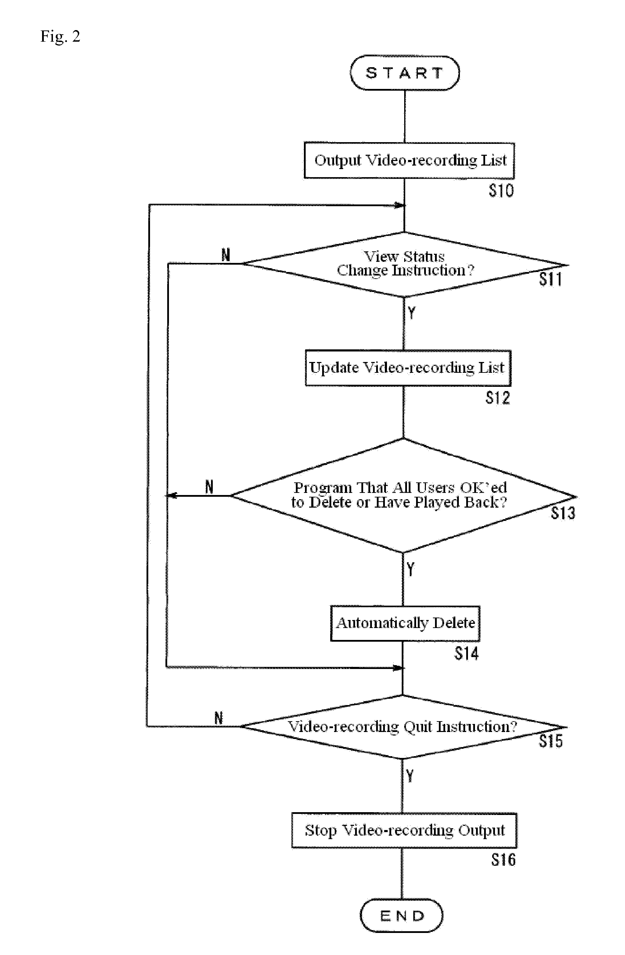

Fig. 2 is a flowchart showing operations related to file management on an HDD-integrated optical-disc apparatus 10. Here, a file for a program video-recorded onto the HDD of the HDD-integrated optical-disc apparatus 10 will be used in the description.

First, the remote controller 70 may be operated (such as by pressing a video-recording list key) by the user, and when a video-recording list display is instructed, the control unit 21 may control to output that video-recording list to the television receiver 30, at step S10.

The video-recording list may be a list of programs recorded on the HDD. A latest video-recording list may be stored in the memory 16, or the list may be created by referencing HDD-recorded content when the video-recording list key is pressed.

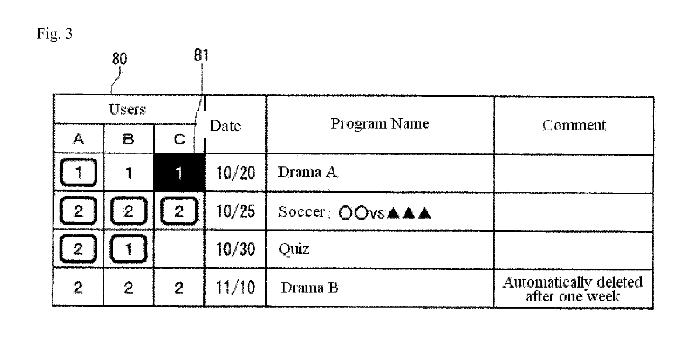

Fig. 3 depicts an example of the video-recording list. From the fields on the left, the recording list 80 may include registered user names, dates of video-recorded programs, program names, and comments. Three users, A, B, and C are registered, but this number is not a limitation. User registration may be implemented on a pre-setup screen or the like.

A bottom field of the user name is a field showing each user's viewing status of each program (file). As a code for viewing status, "1" indicates not viewed (Not-played back); "2" indicates viewed (played back); the bold border indicates Not OK to Delete; no border indicates no desire to view (OK to Delete). For programs newly registered to the video-recording list 80, the viewing status for all users can be set automatically to "1" as a default value. Content automatically judged using the viewing status is shown in the Comments field. In Fig. 3, there is a comment indicating that the program in the bottommost field will be automatically deleted after one week.

Returning to the description of Fig. 2, the system advances from step S10 to step S11, and judges whether there is a change instruction for the viewing status. The remote controller 70 may be operated by a user to implement this instruction. The user may use an up, down, left or right key to move a cursor 81, for example displayed with a color inverted on the video-recording list 80 to a desired field for the user's own user name, and may select a desired code, for example by repeatedly pressing a confirmation key. The code cycles sequentially through "1," "1 Bold Frame," "2," "2 Bold Frame," and "No Code," for example, each time the confirmation key is pressed.

When a change instruction is given for viewing status at step S11, the system advances to step S12, and the HDD-integrated optical-disc apparatus 10 may switche the code for the field where the cursor 81 is positioned pursuant to the instruction. Then, for example when a predetermined amount of time (for example, two seconds) has passed with a code displayed, it is judged that this is the code desired by the user and the video-recording list 80 may be updated to that status.

The system advances from step S12 to step S13, and the control unit 21 may searche the field of the viewing status of the updated video-recording list and judge whether it is a file that all registered users have OK'ed to be deleted or have played back, in other words whether it is a program for which all users A, B and C have set as "No code" or "2."

At step S13, if there is a file that all registered users have OK'ed to be deleted or have played back, the system advances to step S14, and the control unit 21 may control to automatically delete that program after one week, and to display "automatically deleted after one week" in the video-recording list Comment field.

Conversely, at step S11, if there is no change instruction for the viewing status, or if there is no file that all users registered at step S13 have OK'ed to be deleted, or that has been played back, the system advances to step S15. At step S15, it may be judged whether there is a quit instruction for the video-recording list. The remote controller 70 quit key, for example, may be operated by the user to implement this instruction. Also, if the playback key is operated on the remote controller 70, it may be considered to be the quit instruction for the video-recording list, to shift to the playback operation.

If there is a quit instruction for the video-recording list at step S 15, the system advances to step S16, may stop output of the video-recording list, and quit processing. Conversely, at step S15, if there is no quit instruction for the video-recording list, the system returns to step S 11.

It possible for a user easily to judge user viewing status, OK to Delete and Not OK to Delete for each of the recorded video programs, using the video-recording list 80, so such a HDD-integrated optical-disc apparatus 10 is very useful. Furthermore, the HDD-integrated optical-disc apparatus 10 itself may automatically judge and delete a program to delete from the content of the video-recording list 80.

Also, step S13 and step S14 may be omitted, and a program may be manually deleted by referencing the video-recording list viewing status. Also, instead of automatically deleting at step S14, a message recommending deletion may be displayed, and/or selections enabling a selection of whether to OK delete may be also displayed.

Also, with the embodiments described above, when all users have OK'ed deletion or have played back a program, that program is deleted. However, it is also acceptable to delete a program only when all users have OK'ed deletion.

Also, a program that is reserved for video recording in the video-recording list may be added. Also, a video-recorded program may be output separately as a video-recording reservation list. Still further, Not viewed or Not OK to Delete items may be set for each user, for programs that are reserved for video recording.

Also, a popup screen may be displayed prompting selection of the user name before playback or after playback, or when reserving a video recording, to select the user name. For example, when a user name is selected when reserving a video recording, it is possible to automatically set that program in the user name field to Not viewed "1" in the video-recording list after recording.

Also, it is possible to ascertain a status of a reservation for video recording with a reservation mark or the like, for example by looking at an EPG (electronic program guide). Therefore, if it is desired to view a program that someone else has reserved for video recording, that program may be selected, the reservation list may be displayed, and it may be set that program field to Not viewed "1," in the field for your own user name in the list, to indicate your intention also to view that program.

Automatic deletion settings may be set to "Delete immediately" or "Delete after one week" or similar settings. The user may set the number of days until deletion on a setup screen. Also, when automatically deleting is performed after a predetermined number of days, a counter such as "XX days until deleted" may be displayed in the video-recording list.

Also, when it is judged that there is inadequate capacity for recorded video, a list of programs that may be deleted may be displayed. The list of programs that may be deleted may be a list of programs that all users have OK'ed to delete or that have been played back. With this, it is possible to increase the video recording capacity by the user selecting to delete some program.

Also, if the program is one that all users have set to Not delete, a message may be displayed prompting to dub that program from the HDD to an optical disc or the like. After dubbing, the display can be switched from Not OK to Delete to dubbed, thereby allowing the video recording to be deleted from the HDD.
Also, even if set to Not OK to Delete, a message such as "Do you want to keep the data?" may be displayed in the Comment field of the video-recording list if the predetermined amount of time has passed, or to flash the Not OK to Delete mark, to confirm whether the user really does not want to delete the data.

Also, when the apparatus recognizes by which user it is being used, the Not OK to Delete mark may be automatically applied when the same user plays the same program a number of times (for example, three times). In such a case, the mark color may automatically change in the display so that it can be understood that the Not OK to Delete mark has been applied.

In the embodiments described above, a broadcast program is used as an example in the description. However, another file may be used, such as one for a photo, music or video data loaded from the external recording medium 40 and the like, and not only a program. In such a case, viewed corresponds to played back, and not viewed corresponds to not played back.

Items may be set for each user coded in the list of files at least to Not OK to Delete, and OK to Delete. In other words, viewed (played back) and not viewed (not played back) can be eliminated. In such a case, for example, the codes for viewing status in the video-recording list can be switched to Not OK to Delete "X" and OK to Delete "O" and for the default value for each user to be Not OK to Delete "X."

The recording playback apparatus of the present disclosure can be used in a recording playback apparatus such as an optical-disc apparatus or a hard disk apparatus and the like, or it can be used in a hybrid device, for example an HDD-integrated optical-disc apparatus, that incorporates a plurality of recording playback units in one frame.

### [Explanation of Reference signs]

- 10: HDD-integrated optical-disc apparatus (recording playback apparatus)
- 11: Tuner
- 12: Data-processing unit
- 13: HDD recording-playback unit
- 14: BD/DVD recording-playback unit
- 15: OSD unit
- 16: Memory
- 17: Remote-control receiver
- 18: External I/F
- 19: Operating unit
- 20: Display unit
- 21: Control unit
- 30: Television receiver
- 40: External recording medium
- 50, 60: Antennae
- 70: Remote controller

## Claims

1. A recording playback apparatus (10) for a plurality of users that records and plays back files, the recording playback apparatus (10) comprising:
a control unit (21) that controls a display unit (20) to display a list encoded with:
an identification for each of the files of whether the file may be deleted, wherein the identification is selectable by each of the plurality of users, and
an identification for each of the files of whether the file has been played back by each of the plurality of users.

2. The recording playback apparatus (10) according to claim 1, wherein the identification of whether the file has been played back can be selected for each of the files for each of the users.

3. The recording playback apparatus (10) according to claim 1 or claim 2, wherein, before recording or after recording the files, the control unit (21) prompts selection of an identifier that identifies the users that identified the file recording and sets a user field of the identifier selected to indicate that the file has not been played.

4. The recording playback apparatus (10) according to any of claims 1-3, wherein the control unit (21) automatically deletes the file if all the users identified that the file may be deleted or if all the users have played back the file.

5. The recording playback apparatus (10) according to claim 4, wherein the control unit (21) waits for a predetermined amount of time before automatically deleting the file.

6. The recording playback apparatus (10) according to any of claims 1-5, wherein the files comprise video and audio data and wherein the recording playback apparatus further comprises:
a tuner (11) that receives and demodulates a broadcast signal;
a data processing unit (12) that splits video and audio data and control data obtained from the tuner (11); and
a recording playback unit (13) that records compressed video and audio data received from the data processing unit (12).

7. The recording playback apparatus (10) according to any of claims 1-6, wherein the recording playback apparatus (10) further comprises the display unit (20).

8. The recording playback apparatus (10) according to any of claims 1-7, including a plurality of recording playback units.

9. The recording playback apparatus (10) according to any of claims 1-8, wherein the recording playback apparatus (10) comprises an optical-disc apparatus, a hard disk apparatus, or a HDD-integrated optical-disc apparatus.

10. A method of operating a recording playback apparatus (10) for a plurality of users that records and plays back files, the method comprising:
controlling a display unit (20) to display a list encoded with:
an identification for each of the files of whether the file may be deleted, wherein the identification is selectable by each of the plurality of users, and
an identification for each of the files of whether the file has been played back by each of the plurality of users.

11. The method according to claim 10, wherein the identification of whether the file has been played back can be selected for each of the files for each of the users.

12. The method according to claim 10 or claim 11, wherein, before recording or after recording the files, the method further comprises prompting selection of an identifier that identifies the users that identified the file recording and sets a user field of the identifier selected to indicate that the file has not been played.

13. The method according to any of claims 10-12, further comprising automatically deleting the file if all the users identified that the file may be deleted or if all the users have played back the file.

14. The method according to claim 13, further comprising waiting for a predetermined amount of time before automatically deleting the file.
